# EUROPÄISCHE PATENTSCHRIFT

(11) **EP 1 070 628 B1**
(45) Veröffentlichungstag und Bekanntmachung des Hinweises auf die Patenterteilung: **12.11.2003**
(21) Anmeldenummer: 00111851.2
(22) Anmeldetag: 08.06.2000
(51) Int. Cl.: B60N 2/46

(54) **Klappbares Sitzteil und Sitzmodul**
Foldable seat part and seat module
Partie de siège rabattable et siège modulaire

(30) Priorität: 23.07.1999 DE 29912877 U
(43) Veröffentlichungstag der Anmeldung: 24.01.2001
(73) Patentinhaber: Johnson Controls GmbH, 51399 Burscheid (DE)
(72) Erfinder: Aitken, Thomas J., Holland Michigan 49424 (US); Snook, Michael, 51399 Burscheid (DE)
(74) Vertreter: Wolff, Felix, Dr.

(56) Entgegenhaltungen:
- EP-A- 0 751 037
- DE-A- 1 630 540
- DE-A- 4 125 783
- DE-A- 4 343 242
- GB-A- 1 151 940
- US-A- 1 802 620

## Beschreibung

Die vorliegende Erfindung betrifft ein klappbares Sitzteil, insbesondere der Rückenlehne eines Kraftfahrzeugsitzes.

Derartige Sitzteile sind bekannt, wobei es sich dabei beispielsweise um eine Armlehne handeln kann, die aus der Rückenlehne einer Rücksitzbank eines Kraftfahrzeugs herausgeklappt werden kann.

Des weiteren betrifft die vorliegende Erfindung ein Sitzmodul mit einer Rahmenstruktur, die einen Träger für ein Sitzkissen und eine Aufnahmevertiefung für ein Lehnenteil bildet.

Derartige Sitzteilmodule sind ebenfalls bekannt, wobei es sich dabei beispielsweise um einen in einem Kraftfahrzeug montierbaren Einzelsitz handeln kann.

Die DE-A-43 43 242 beschreibt ein klappbares Sitzteil einer Rückenlehne eines Fahrzeugsitzes. Dieses klappbare Sitzteil ist mit einem integrierten Tisch mit einem Basisteil und einer Tischplatte versehen. Die Tischplatte weist ein Zentralteil und ein an dem Zentralteil schwenkbar befestigtes Tischvergrößerungsteil zur Vergrößerung der Tischfläche auf. Um eine größtmögliche Tischfläche zu erreichen, müssen relativ umständliche Dreh- und Umklappbewegungen ausgeführt werden, wobei die Tischplatte dann über einen einzigen Tragarm mit dem Basisteil verbunden ist, was relativ unstabil ist.

Der Erfindung liegt die Aufgabe zugrunde, mit geringem konstrukiven Aufwand ein Sitzteil bzw. ein Sitzmodul der eingangs genannten Art derart zu verbessern, daß dadurch der Komfort für Benutzer verbessert und eine stabile Tischfläche erreicht wird.

Erfindungsgemäß wird dies bei einem eingangs genannten Sitzteil mit einem integrierten Tisch mit einem Basisteil und mit einer Tischplatte erreicht, wobei die Tischplatte ein Zentralteil und mindestens ein am Zentralteil schwenkbar befestigtes Seitenteil zur Vergrößerung der Tischfläche aufweist Sitzteil, das jenem nach der DE-A-4 343 242 gattungsgemäß ausgebildet ist, dadurch gekennzeichnet, daß die Tischplatte gegenüber dem Basisteil derart verdrehbar angeordnet ist, daß durch ihre Verdrehung eine Arretierung des Seitenteiles in einer horizontalen Ebene mit dem Zentralteil erfolgt, wobei das Zentralteil und das Seitenteil jeweils bereichsweise auf dem 3asisteil aufliegen.

Der Tisch des erfindungsgemäßen Sitzteils kann vorteilhafterweise bedarfsweise ein- und ausgeklappt werden. Durch das am Zentralteil schwenkbar befestigte Seitenteil wird dabei einerseits in der (ausgeklappten) Gebrauchslage des Tisches, in der Zentralteil und Seitenteil die Tischplatte bilden und gegenüber dem Basisteil verdreht sind, eine große und stabile Tischfläche erreicht. Andererseits nimmt der in das erfindungsgemäße Sitzteil integrierte Tisch in seiner (eingeklappten) Nichtgebrauchslage nur wenig Raum ein und kann sogar völlig nicht sichtbar angeordnet werden. Damit sich der Tisch gewissermaßen auffaltet und sich um einen zentralen Punkt dreht, um die Tischplatte, insbesondere deren Seitenteil in horizontaler Lage zu stabilisieren sind nur wenige Komponenten notwendig bzw. nur ein geringer konstruktiver Aufwand erforderlich.

In bevorzugter Ausführung kann es sich bei dem erfindungsgemäßen Sitzteil insbesondere um eine Armlehne, vornehmlich um eine Mittelarmlehne einer Rücksitzbank eines Kraftfahrzeugs handeln. Dadurch erhöht sich der Fahrkomfort insbesondere für Fahrzeuginsassen, die im hinteren Wagenfond sitzen.

Außerdem ist es äußerst zweckmäßig, wenn die Tischplatte zwei gegenüber dem Zentralteil verschwenkbare, insbesondere symmetrisch zum Zentralteil angeordnete Seitenteile aufweist, weil dadurch die Tischfläche noch weiter vergrößert wird.

Bei dem erfindungsgemäßen Sitzmodul der eingangs genannten Art ist das Lehnenteil als erfindungsgemäßes Sitzteil ausgebildet und weist dadurch alle dessen Vorzüge auf.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels wird im folgenden die Erfindung näher erläutert. Dabei zeigen:
- Fig. 1: in perspektivischer Ansicht, eine Rücksitzbank eines Kraftfahrzeugs, in der als Mittelarmlehne ein erfindungsgemäßes klappbares Sitzteil angeordnet ist, wobei dessen eingeklappter Zustand dargestellt ist,
- Fig. 2: in Fig. 1 entsprechender perspektivischer Darstellung ein erfindungsgemäßes Sitzmodul mit dem erfindungsgemäßen klappbaren Sitzteil nach Fig. 1, wobei das Herausklappen des Sitzteiles aus einer Trägerstruktur dargestellt ist,
- Fig. 3: in perspektivischer Ansicht, jedoch in der Darstellung etwas abweichend von Fig. 1 und 2, die Rücksitzbank mit dem erfindungsgemäßen klappbaren Sitzteil, wobei dessen ausgeklappter Zustand und eine erste Phase zur Vorbereitung der Ingebrauchnahme eines integrierten Tisches dargestellt ist,
- Fig. 4: in Fig. 3 entsprechender perspektivischer Darstellung, die Rücksitzbank mit dem erfindungsgemäßen klappbaren Sitzteil, wobei dessen ausgeklappter Zustand und eine zweite Phase zur Vorbereitung der Ingebrauchnahme des integrierten Tisches dargestellt ist,
- Fig. 5: eine Frontansicht des erfindungsgemäßen klappbaren Sitzteils,
- Fig. 6: in Fig. 2 entsprechender perspektivischer Darstellung, das erfindungsgemäße Sitzmodul mit dem erfindungsgemäßen Sitzteil, wobei dessen ausgeklappter Zustand und eine dritte Phase zur Vorbereitung der Ingebrauchnahme des integrierten Tisches dargestellt ist,
- Fig. 7: in Fig. 3 und 4 entsprechender perspektivischer Darstellung, die Rücksitzbank mit dem erfindungsgemäßen klappbaren Sitzteil einschließlich des fertig zur Ingebrauchnahme vorbereiteten integrierten Tisches.

In den verschiedenen Figuren der Zeichnung sind gleiche Teile stets mit den gleichen Bezugszeichen versehen und werden daher in der Regel auch jeweils nur einmal beschrieben.

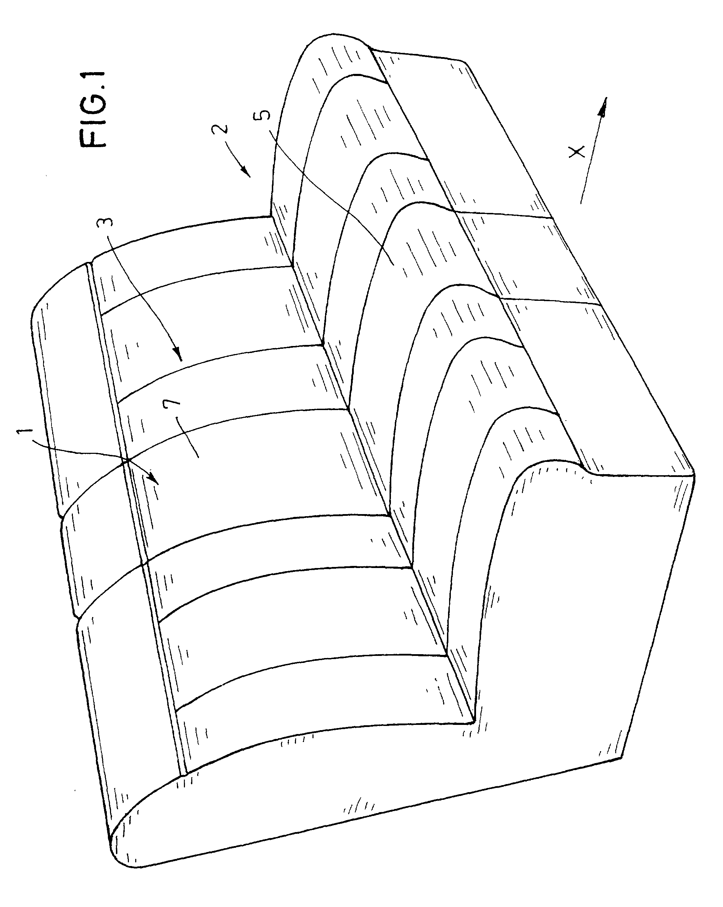

Wie zunächst aus Fig. 1 hervorgeht, handelt es sich bei der beispielhaft dargestellten Ausführung eines erfindungsgemäßen klappbaren Sitzteils 1 insbesondere um eine Mittelarmlehne, die sich an einer Rücksitzbank 2 eines Kraftfahrzeugs, und zwar in der Rückenlehne 3 der Rücksitzbank 2, befindet. In Fig. 1 ist der eingeklappte Zustand des Sitzteils 1 dargestellt, bei dessen Vorliegen die Mittelarmlehne eine Front mit der Rückenlehne 3 bildet und die nicht näher bezeichnete Längsachse des Sitzteils 1 (mit einer ergonomisch bedingten Schräglage entgegen der Fahrtrichtung - Pfeil X) etwa vertikal angeordnet ist.

Da ein in das erfindungsgemäße Sitzteil 1 integrierter Tisch in der eingeklappten Nichtgebrauchslage nicht zu sehen ist, unterscheidet sich die Darstellung des erfindungsgemäßen Sitzteils 1 gemäß Fig. 1 nicht von einer entsprechenden Darstellung eines bekannten Sitzteils der eingangs genannten Art.

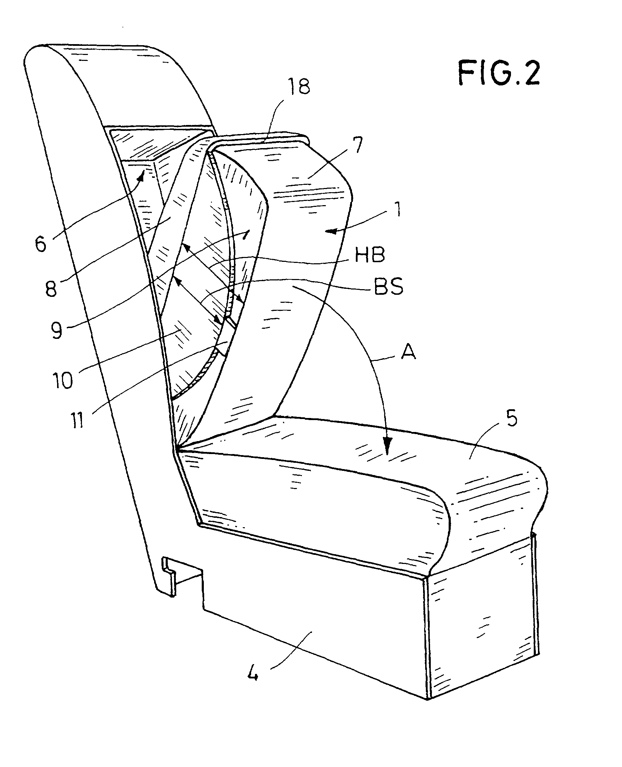

Fig. 2 veranschaulicht, daß das erfindungsgemäße klappbare Sitzteil 1 zusammen mit einer Rahmenstruktur 4, die einen Träger für ein Sitzkissen 5 und eine Aufnahmevertiefung 6 für die Armlehne bildet, als ein in die Rücksitzbank 2 als Ganzes einsetzbares erfindungsgemäßes Sitzmodul ausgebildet sein kann.

Fig. 2 zeigt das Herausklappen des Sitzteils 1 (im Sinne des Pfeiles A) aus der gemeinsamen Front mit der Rückenlehne 3 der Rücksitzbank 2 bzw. insbesondere aus der Aufnahmevertiefung 6 der Rahmenstruktur 4. Die Schwenkachse verläuft dabei in Nähe des Sitzkissens 5 quer durch den unteren Teil der Aufnahmevertiefung 6.

Aus Fig. 2 geht bereits auch schon hervor, daß das erfindungsgemäße Sitzteil 1 einen mehrteiligen Aufbau besitzt.

In der Zeichnung sind dabei zunächst ein Basisteil 7 mit - abgesehen von ergonomisch vorteilhaften Verrundungen - im wesentlichen quaderförmiger Grundgestalt, eine oberseitig des Basisteils 7 befindliche Abdeckung 8 und ein an der Seitenwand 9 des Basisteils 7 anliegendes, plattenförmig ausgebildetes Teil (Bezugszeichen 10) in Form eines Kreisabschnitts zu sehen. Bei diesem letzteren Teil handelt es sich um ein Seitenteil 10 des in das erfindungsgemäße Sitzteil 1 integrierten Tisches.

Eine Breite BS des Seitenteils 10 entspricht etwa der Höhe HB der Seitenwand 9 des Basisteils 7. Durch diese Dimensionierung kann die unter Beteiligung des Seitenteiles 10 auszubildende Tischfläche einerseits maximal vergrößert werden, andererseits kann das Seitenteil gut in der Aufnahmevertiefung 6 untergebracht werden.

Wie dargestellt, kann das Seitenteil 10 mit Vorteil durch eine einfach zu lösende Halterungsvorrichtung 11, wie eine Schnapp- oder Rastvorrichtung, seitlich des Basisteils 7 festgelegt sein.

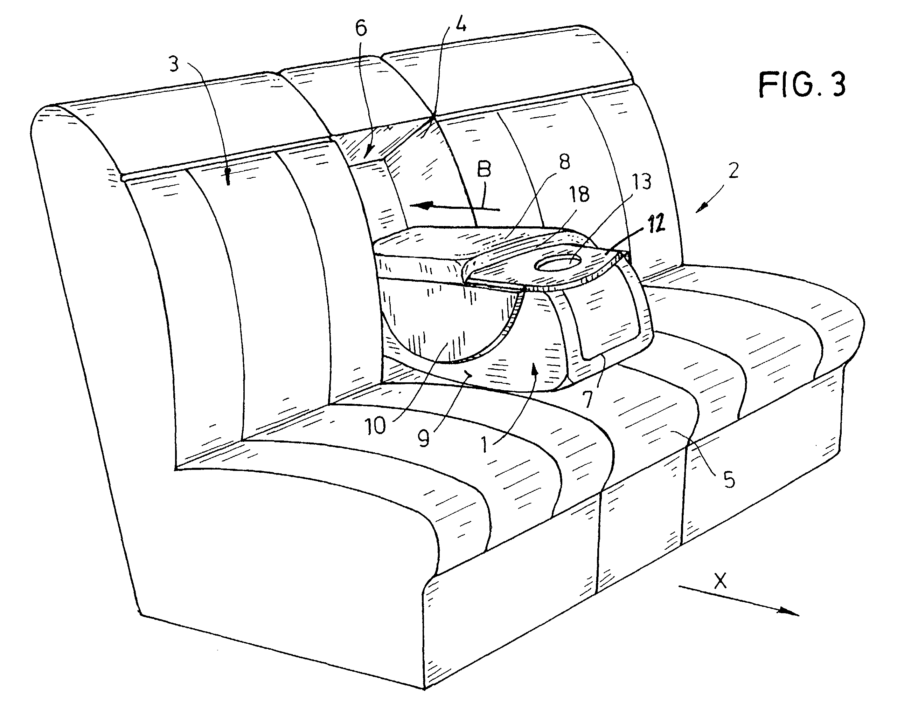

In Fig. 3 ist in etwas gegenüber Fig. 1 und 2 abweichender Darstellung - jedoch nicht grundsätzlich anderer Ausführung - die Rücksitzbank 2 mit dem erfindungsgemäßen klappbaren Sitzteil 1 gezeigt, das sich nun in seinem ausgeklappten Zustand befindet, bei dessen Vorliegen, die Mittelarmlehne auf dem Sitzkissen 5 aufliegen kann und die nicht näher bezeichnete Längsachse des Sitzteils 1 horizontal angeordnet ist.

Als eine erste Phase zur Vorbereitung der Ingebrauchnahme des integrierten Tisches zeigt Fig. 3, daß die insbesondere gegenüber dem Basisteil 7 verschiebliche Abdeckung 8 für das Basisteil 7 bei einer Verschiebung im Sinne des Pfeiles B (entgegen der Fahrtrichtung X) ein mit dem Bezugszeichen 12 bezeichnetes Teil freigibt, das oberseitig auf dem Basisteil 7 angeordnet ist. Bei diesem Teil handelt es sich um ein Zentralteil 12 des in das erfindungsgemäße Sitzteil 1 integrierten Tisches. Das Zentralteil 12 und die beiden mit dem Zentralteil 12 schwenkbar verbundenen Seitenteile 10 bilden im Gebrauchszustand die Tischplatte des Tisches, die in ergonomisch optimaler Anpassung an einen - in einem Kraftfahrzeug zumeist relativ geringen - zur Verfügung stehenden Raum vorzugsweise kreisförmig ausgebildet sein kann.

Die Tischplatte kann in vorteilhafter Ausführung - wie in Fig. 3 im Zentralteil 12 dargestellt - mindestens eine Vertiefung oder Aufnahmeöffnung 13 für Behälter, wie Getränkedosen, Gläser oder Teller, aufweisen, wodurch diese gegen Umkippen oder Verrutschen gesichert werden können.

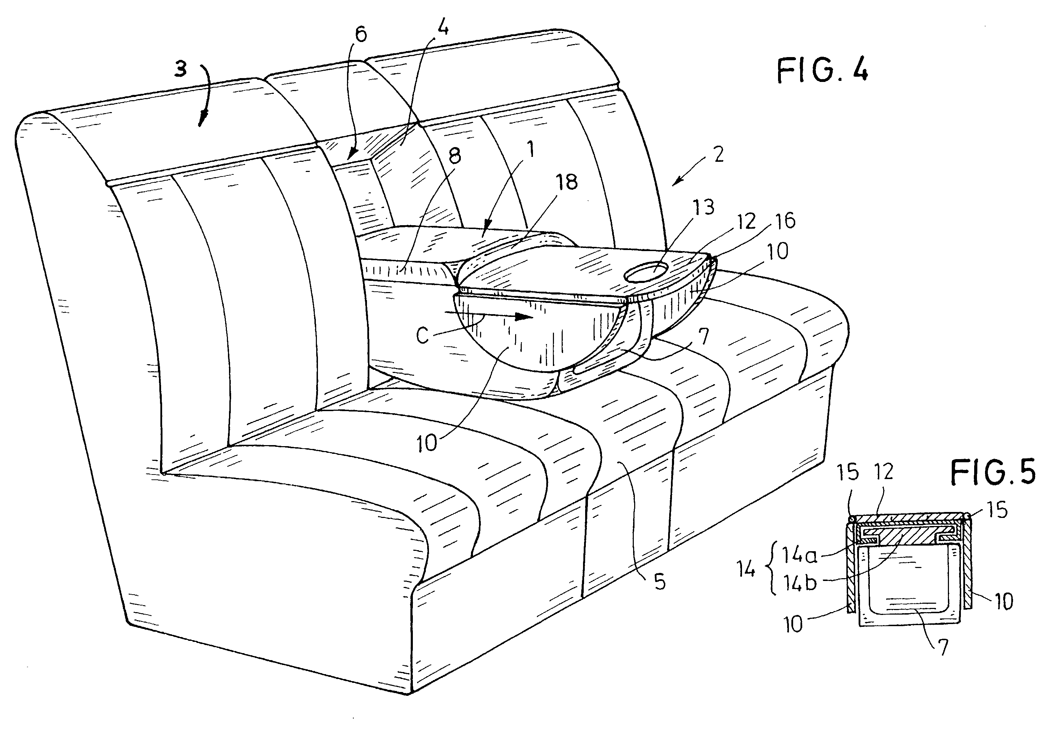

Fig. 4 zeigt nun eine zweite Phase zur Vorbereitung der Ingebrauchnahme des in das erfindungsgemäße Sitzteil 1 integrierten Tisches. Das Basisteil 7 kann vorteilhafterweise eine Linearführung 14 für die Tischplatte des integrierten Tisches, insbesondere für das Zentralteil 12 (in Richtung von dessen Längsachse), aufweisen. Die Linearführung 14 kann beispielsweise nach der Art einer Schwalbenschwanzführung ausgeführt sein.

Die Frontansicht in Fig. 5 zeigt diesbezüglich, daß die Linearführung 14 aus zwei formschlüssig ineinandergreifenden Führungsschienen 14a, 14b bestehen kann, von denen eine (die im Querschnitt U-förmige Führungsschiene 14a mit einwärts gebogenen U-Schenkeln) am Zentralteil 12 des Tisches und die andere (die im Querschnitt T-förmige Führungsschiene 14b) am Basisteil 7 befestigt oder ausgebildet ist. Das Zentralteil 12, das über in Fig. 5 ebenfalls sichtbare Gelenke 15 mit den beiden Seitenteilen 10 verbunden ist, kann in der Linearführung 14 im Sinne des Pfeiles C (in Fahrtrichtung X) gezogen werden, wodurch der Tisch mit Vorteil in seiner Gebrauchsstellung in vergrößertem Abstand von der Rückenlehne 3 angeordnet werden kann und seine Tischfläche für die Fahrzeuginsassen besser erreichbar ist.

Zur Erleichterung des Herausziehens kann die Tischplatte am Zentralteil 12 einen Handgriff 16 aufweisen, wie dies Fig. 4 zeigt.

Die zeichnerische Darstellung in Fig. 4 (wie auch die weiteren Figuren) zeigt auch, daß der in das erfindungsgemäße Sitzteil 1 integrierte Tisch vorteilhafterweise zwei etwa kongruente und symmetrisch angeordnete Seitenteile 10 aufweisen kann.

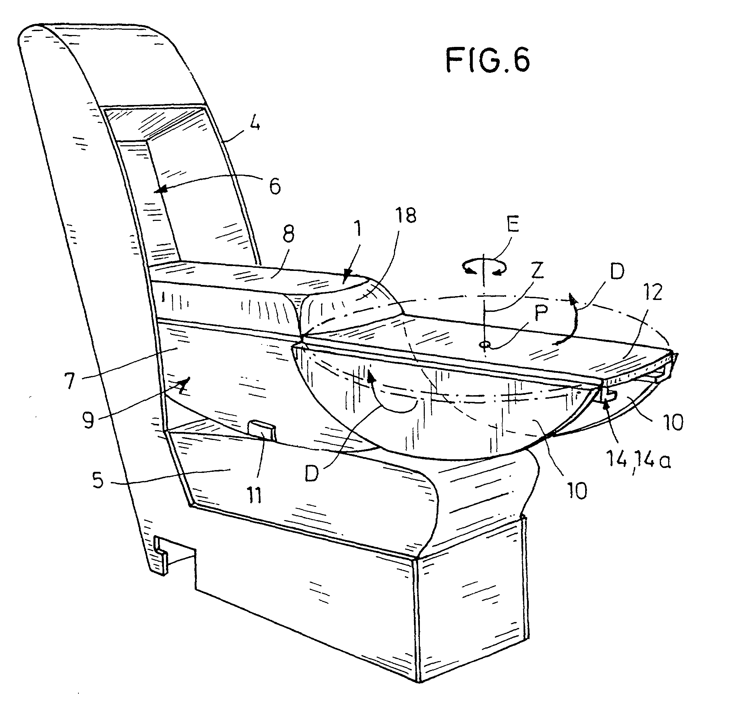

Fig. 6 veranschaulicht die dritte Phase zur Vorbereitung der Ingebrauchnahme des integrierten Tisches. Wie bereits erwähnt, sind die beiden Seitenteile 10 zur Vergrößerung der Tischfläche am Zentralteil 12 schwenkbar befestigt, so daß sie im Sinne der Pfeile D, aus der Position, in der sie an der Seitenwand 9 des Basisteils 7 anliegen, in eine Position geschwenkt werden können, in denen sie mit dem Zentralteil 12 eine horizontale Ebene, d.h. die Tischfläche, bilden. Diese Position ist in Fig. 6 mit strichpunktierten Linien dargestellt.

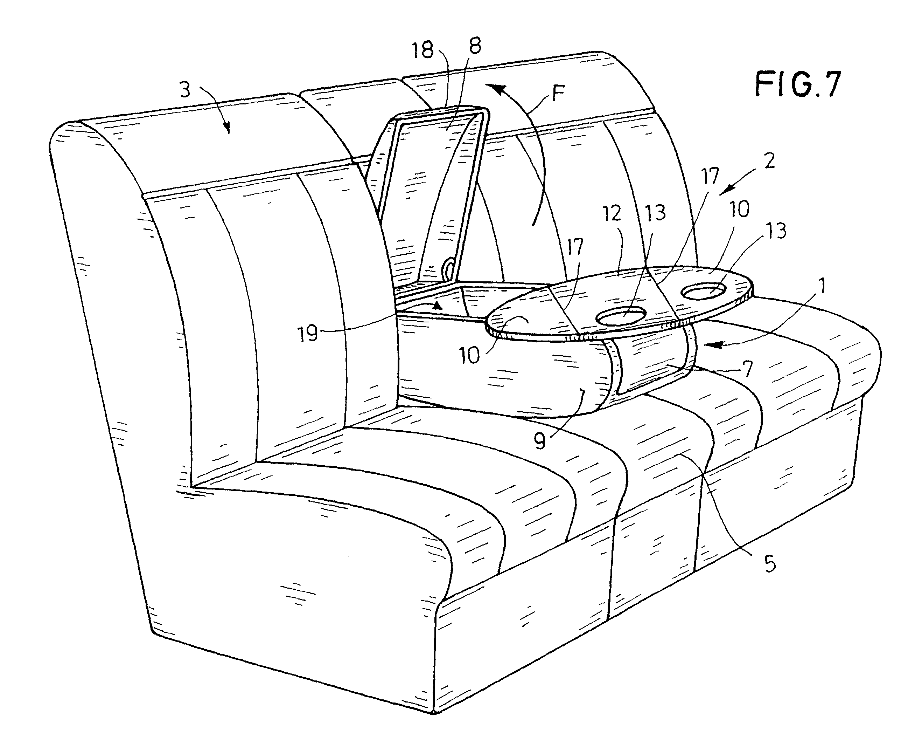

Das Zentralteil 12 mit den daran befindlichen und horizontal ausgerichteten Seitenteilen 10 ist um eine vertikale Achse Z, die durch einen zentralen Lagerpunkt P verläuft, gegenüber dem Basisteil 7 derart verdrehbar (Pfeil E in Fig. 6) angeordnet, daß durch die Verdrehung eine Arretierung der Seitenteile 10 in der horizontalen Ebene bewirkt wird, wobei das Zentralteil 12 und das Seitenteil 10 jeweils bereichsweise auf dem Basisteil 7 aufliegen. Damit ist die in Fig. 7 gezeigte stabile Gebrauchsposition des Tisches erreicht.

Zum Erreichen einer optimal hohen Stabilität kann in der arretierten Lage von Seitenteilen 10 und Zentralteil 12 jeweils eine zwischen ihnen verlaufende Fuge 17 etwa im Winkel von 45° zur Längsachse des Basisteils 7 bzw. des Sitzteils ausgerichtet sein. Des weiteren können die Seitenteile 10 und das Zentralteil 12 so dimensioniert sein, daß in der arretierten Lage von Seitenteilen 10 und Zentralteil 12 die zwischen ihnen verlaufende Fugen 17 mindestens etwa zu einem Drittel, vorzugsweise etwa zur Hälfte, ihrer Länge auf dem Basisteil 7 aufliegen.

Fig. 7 zeigt des weiteren, daß die Abdeckung 8 gegenüber dem Basisteil 7 nicht nur verschieblich, sondern vorteilhafterweise gleichzeitig auch im Sinnes des Pfeiles F verschwenkbar gelagert sein kann. Durch dieses Verschwenken bewegt sich die dem Tisch in seiner Gebrauchsstellung zugewandte Vorderkante 18 der Abdeckung 8 nach oben und nach hinten (entgegen der Fahrtrichtung X). Durch die Darstellung dieser verschwenkten Stellung, in der die Abdeckung 8 mit Vorteil auch fixierbar sein kann, wird aus Fig. 7 deutlich, daß das Basisteil 7 vorteilhafterweise als oberseitig offener Hohlkörper ausgebildet sein kann, wodurch eine Ablage von Gegenständen in einem Aufnahmeraum 19 des erfindungsgemäßen Sitzteils 1 ermöglicht wird.

In kurzer Zusammenfassung stellt sich die Herstellung der Gebrauchslage des Tisches so dar: Nach dem Herausklappen des erfindungsgemäßen Sitzteils (der Lehne) gleitet die Abdeckung 8 zurück, wodurch die Tischoberfläche des Zentralteils 12 sichtbar wird. Die Tischplatte (Zentralteil 12 mit verschwenkbaren Seitenteilen 10) gleitet heraus, faltet sich auf und dreht sich um den zentralen Lagerpunkt P, wobei die Seitenteile 10 in horizontaler Lage stabilisiert werden. Diese Drehstabilisierung des Tisches ist sicher, arbeitet mit wenigen Komponenten und erfordert so nur geringen baulichen Aufwand. Der in das erfindungsgemäße Sitzteil 1 integrierte Tisch bietet in einem Kraftfahrzeug einen erhöhten Komfort.

Die vorliegende Erfindung ist nicht auf das dargestellte Ausführungsbeispiel beschränkt, sondern umfaßt auch alle im Sinne der Erfindung gleichwirkenden Ausführungen. Beispielsweise geht aus der modulartigen Ausbildung, wie sie aus der Zeichnung (z.B aus Fig. 2) deutlich wird, hervor, daß es sich bei dem erfindungsgemäßen Sitzteil 1 nicht zwangsläufig um eine Armlehne in der Rücksitzbank 2 eines Kraftfahrzeugs handeln muß, sondern bei entsprechender Breite der Rahmenstruktur 4 und der von ihr getragenen Teile kann es sich bei dem derart gebildeten erfindungsgemäßen Sitzmodul auch um einen separaten Sitz handeln, der ausreichend Platz für eine Person bietet, wobei das erfindungsgemäße Sitzteil 1 - wiederum als Lehnenteil - dessen Rückenlehne bildet. Die Tischplatte (in erster Linie deren Seitenteile 10) kann (können) insbesondere auch aus einem dünnen Material bestehen, das wenig raumgreifend unter die Abdeckung 8 gepackt und an den Seiten 9 des Basisteils 7 heruntergefaltet werden kann. Aufnahmeöffnungen 13 für Gefäße können auch in den Seitenteilen 10 vorhanden sein.

### Bezugszeichen

- 1: Sitzteil
- 2: Rücksitzbank
- 3: Rückenlehne
- 4: Rahmenstruktur
- 5: Sitzkissen
- 6: Aufnahmevertiefung für 1 in 4
- 7: Basisteil von 1
- 8: Abdeckung für 7
- 9: Seitenwand von 7
- 10: Seitenteil von 1
- 11: Halterungsvorrichtung für 10
- 12: Zentralteil von 1
- 13: Aufnahmeöffnung in 12 bzw. 10
- 14: Linearführung
- 14a: Führungsschiene von 14 an 12
- 14b: Führungsschiene von 14 an 7
- 15: Gelenk zwischen 12 und 10
- 16: Handgriff an 12
- 17: Fuge zwischen 10 und 12
- 18: Vorderkante von 8
- 19: Aufnahmeraum in 1

- A: Richtungspfeil für Schwenkbewegung von 1
- B: Richtungspfeil für Verschiebung 8
- BS: Breite von 10
- C: Richtungspfeil für Verschiebung 12
- D: Richtungspfeil für Schwenkbewegung von 10
- E: Richtungspfeil für Drehbewegung von 12
- F: Richtungspfeil für Schwenkbewegung von 8
- HB: Höhe von 9
- P: Lagerpunkt
- X: Fahrtrichtung
- Z: Drehachse von 12

## Patentansprüche

1. Klappbares Sitzteil, insbesondere der Rückenlehne (3) eines Kraftfahrzeugsitzes, mit einem integrierten Tisch mit einem Basisteil (7) und mit einer Tischplatte, die einen Zentralteil (12) und mindestens ein an dem Zentralteil (12) schwenkbar befestigtes Seitenteil (10) zur Vergrößerung ihrer Tischfläche aufweist, **dadurch gekennzeichnet, dass** die Tischplatte gegenüber dem Basisteil (7) derart verdrehbar angeordnet ist, dass durch ihre Verdrehung eine Arretierung des Seitenteils (10) in einer horizontalen Ebene mit dem Zentralteil (12) erfolgt, wobei das Zentralteil (12) und das Seitenteil (10) jeweils bereichsweise auf dem Basisteil (7) aufliegen.

2. Sitzteil nach Anspruch 1,
**gekennzeichnet durch** eine Ausbildung als Armlehne, insbesondere als Mittelarmlehne einer Rücksitzbank (2) eines Kraftfahrzeugs.

3. Sitzteil nach Anspruch 1 oder 2,
**dadurch gekennzeichnet, daß** die Tischplatte zwei gegenüber dem Zentralteil (12) verschwenkbare, insbesondere symmetrisch zum Zentralteil (12) angeordnete Seitenteile (10) aufweist.

4. Sitzteil nach einem der Ansprüche 1 bis 3,
**dadurch gekennzeichnet, daß** die Tischplatte kreisförmig ausgebildet ist.

5. Sitzteil nach einem der Ansprüche 1 bis 4,
**dadurch gekennzeichnet, daß** die Tischplatte mindestens eine Vertiefung oder Aufnahmeöffnung (13) für Behälter, wie Getränkedosen, Gläser oder Teller, aufweist.

6. Sitzteil nach einem der Ansprüche 1 bis 5,
**dadurch gekennzeichnet, daß** das Basisteil (7) eine im wesentlichen quaderförmige Grundgestalt aufweist.

7. Sitzteil nach einem der Ansprüche 1 bis 6,
**dadurch gekennzeichnet, daß** das Basisteil (7) als Hohlkörper ausgebildet ist und derart einen Aufnahmeraum (19) für Gegenstände bildet.

8. Sitzteil nach einem der Ansprüche 1 bis 7,
**gekennzeichnet durch** eine insbesondere gegenüber dem Basisteil (7) verschiebliche und/oder verschwenkbare Abdeckung (8) für das Basisteil (7).

9. Sitzteil nach einem der Ansprüche 1 bis 8,
**dadurch gekennzeichnet, daß** das Basisteil (7) in Richtung seiner Längsachse eine Linearführung (14) für die Tischplatte aufweist.

10. Sitzteil nach einem der Ansprüche 1 bis 9,
**dadurch gekennzeichnet, daß** die Tischplatte am Zentralteil (12) einen Handgriff (16) aufweist.

11. Sitzteil nach einem der Ansprüche 1 bis 10,
**dadurch gekennzeichnet, daß** eine Breite (BS) des Seitenteils (10) etwa einer Höhe (HB) einer Seitenwand (9) des Basisteils (7) entspricht.

12. Sitzteil nach einem der Ansprüche 1 bis 11,
**dadurch gekennzeichnet, daß** in der arretierten Lage von Seitenteil (10) und Zentralteil (12) eine zwischen ihnen verlaufende Fuge (17) mindestens etwa zu einem Drittel, vorzugsweise etwa zur Hälfte, ihrer Länge auf dem Basisteil (7) aufliegt.

13. Sitzteil nach einem der Ansprüche 1 bis 12,
**dadurch gekennzeichnet, daß** in der arretierten Lage von Seitenteil (10) und Zentralteil (12) eine zwischen ihnen verlaufende Fuge (17) etwa im Winkel von 45° zur Längsachse des Basisteils (7) steht.

14. Sitzmodul mit einer Rahmenstruktur (4), die einen Träger für ein Sitzkissen (5) und eine Aufnahmevertiefung (6) für ein Lehnenteil bildet,
**gekennzeichnet durch** eine Ausbildung des Lehnenteiles als Sitzteil (1) nach einem der Ansprüche 1 bis 13.

## Claims

1. Foldable seat part, in particular belonging to the backrest (3) of a motor vehicle seat, with an integrated table having a base part (7) and having a table top, which has a central part (12) and at least one side part (10) fastened pivotably to the central part (12) and intended for enlarging its table surface, **characterized in that** the table top is arranged such that it can be rotated with respect to the base part (7) in such a manner that its rotation causes the side part (10) to be locked in a horizontal plane to the central part (12), in which case some areas of the central part (12) and the side part (10) rest in each case on the base part (7).

2. Seat part according to Claim 1, **characterized by** being designed as an armrest, in particular as a central armrest of a rear seat bench (2) of a motor vehicle.

3. Seat part according to Claim 1 or 2, characterized in that the table top has two side parts (10) which can be pivoted with respect to the central part (12) and in particular are arranged symmetrically with respect to the central part (12).

4. Seat part according to one of Claims 1 to 3, **characterized in that** the table top is of circular design.

5. Seat part according to one of Claims 1 to 4, **characterized in that** the table top has at least one depression or receiving opening (13) for containers, such as cans of drink, glasses or plates.

6. Seat part according to one of Claims 1 to 5, **characterized in that** the base part (7) has an essentially cuboidal basic form.

7. Seat part according to one of Claims 1 to 6, **characterized in that** the base part (7) is designed as a hollow body and in such a way forms a receiving space (19) for objects.

8. Seat part according to one of Claims 1 to 7, **characterized by** a covering (8) for the base part (7), which covering can be displaced and/or pivoted in particular with respect to the base part (7).

9. Seat part according to one of Claims 1 to 8, **characterized in that** the base part (7) has, in the direction of its longitudinal axis, a linear guide (14) for the table top.

10. Seat part according to one of Claims 1 to 9, **characterized in that** the table top has a handle (16) on the central part (12).

11. Seat part according to one of Claims 1 to 10, **characterized in that** a width (BS) of the side part (10) corresponds approximately to a height (HB) of a side wall (9) of the base part (7).

12. Seat part according to one of Claims 1 to 11, **characterized in that** in the locked position of the side part (10) and central part (12) at least approximately a third, preferably approximately half, of the length of a joint (17) running between them rests on the base part (7).

13. Seat part according to one of Claims 1 to 12, **characterized in that** in the locked position of the side part (10) and central part (12) a joint (17) running between them is approximately at an angle of 45° with respect to the longitudinal axis of the base part (7).

14. Seat module having a frame structure (4) which forms a support for a seat cushion (5) and a receiving depression (6) for a backrest part, **characterized by** the backrest part being designed as the seat part (1) according to one of Claims 1 to 13.

## Revendications

1. Partie de siège rabattable, en particulier du dossier (3) d'un siège de véhicule, comprenant une table intégrée avec une partie de base (7) et un plateau de table, qui présente une partie centrale (12) et au moins une partie latérale (10) fixée de manière pivotante sur la partie centrale (12) pour augmenter la surface de la table, **caractérisée en ce que** le plateau de table est disposé de manière à pouvoir tourner par rapport à la partie de base (7) de telle sorte que sa rotation permette un blocage de la partie latérale (10) dans un plan horizontal avec la partie centrale (12), la partie centrale (12) et la partie latérale (10) reposant chacune en partie sur la partie de base (7).

2. Partie de siège selon la revendication 1,
**caractérisée par** une réalisation en tant qu'accoudoir, en particulier en tant qu'accoudoir central d'une banquette arrière (2) d'un véhicule automobile.

3. Partie de siège selon les revendications 1 ou 2,
**caractérisée en ce que** le plateau de table présente deux parties latérales (10) disposées de manière à pouvoir pivoter par rapport à la partie centrale (12), en particulier disposées symétriquement par rapport à la partie centrale (12).

4. Partie de siège selon l'une quelconque des revendications 1 à 3,
**caractérisée en ce que** le plateau de siège est réalisé avec une forme circulaire.

5. Partie de siège selon l'une quelconque des revendications 1 à 4,
**caractérisée en ce que** le plateau de table présente au moins un renfoncement ou une ouverture de réception (13) pour des récipients, tels que des boîtes de boisson, des verres ou des assiettes.

6. Partie de siège selon l'une quelconque des revendications 1 à 5,
**caractérisée en ce que** la partie de base (7) présente une configuration de base de forme essentiellement quadratique.

7. Partie de siège selon l'une quelconque des revendications 1 à 6, **caractérisée en ce que** la partie de base (7) est réalisée en tant que corps creux et former ainsi un espace de logement (19) pour des objets.

8. Partie de siège selon l'une quelconque des revendications 1 à 7, **caractérisée par** un recouvrement (8) pour la partie de base (7) pouvant être déplacé et/ou pouvant pivoter par rapport à la partie de base (7).

9. Partie de siège selon l'une quelconque des revendications 1 à 8, **caractérisée en ce que** la partie de base (7) présente une glissière linéaire (14) pour le plateau de table dans la direction de son axe longitudinal.

10. Partie de siège selon l'une quelconque des revendications 1 à 9, **caractérisée en ce que** le plateau de table présente une poignée (16) sur la partie centrale (12).

11. Partie de siège selon l'une quelconque des revendications 1 à 10, **caractérisée en ce qu'**une largeur (BS) de la partie latérale (10) correspond approximativement à une hauteur (HB) d'une paroi latérale (9) de la partie de base (7).

12. Partie de siège selon l'une quelconque des revendications 1 à 11, **caractérisée en ce que** dans la position bloquée de la partie latérale (10) et de la partie centrale (12), un joint (17) s'étendant entre elles repose au moins approximativement sur un tiers, de préférence approximativement sur la moitié de sa longueur, sur la partie de base (7).

13. Partie de siège selon l'une quelconque des revendications 1 à 12, **caractérisée en ce que** dans la position bloquée de la partie latérale (10) et de la partie centrale (12), un joint (17) s'étendant entre elles se trouve approximativement à un angle de 45° par rapport à l'axe longitudinal de la partie de base (7).

14. Module de siège comprenant une structure de cadre (4), qui forme un support pour un coussin de siège (5) et un renfoncement de logement (6) pour une partie de dossier,
**caractérisé par** une réalisation de la partie du dossier sous forme de partie de siège (1) selon l'une quelconque des revendications 1 à 13.
